# DEMANDE DE BREVET EUROPEEN

(11) **EP 4 567 266 A1**
(43) Date de publication de la demande: **11.06.2025**
(21) Numéro de dépôt: 24200996.7
(22) Date de dépôt: 18.09.2024
(51) Int. Cl.: F02C 7/275

(54) **INSTALLATION MOTRICE MUNIE D'UN TURBOMOTEUR ET D'UN CIRCUIT DE DEMARRAGE ADAPTATIF ET PROCEDE DE DEMARRAGE ADAPTATIF D'UN TURBOMOTEUR**

(30) Priorité: 05.12.2023 FR 2313576
(71) Demandeur: Airbus Helicopters, 13725 Marignane Cedex (FR)
(72) Inventeur: GAZZINO, Marc, 13012 Msrseille (FR)
(74) Mandataire: GPI Brevets

(57) **Abrégé**

La présente invention concerne un procédé de démarrage adaptatif d'un turbomoteur (10) comportant un générateur de gaz (11), une machine électrique (21) connectée mécaniquement audit générateur de gaz (11) et électriquement à une ou plusieurs sources d'énergie électrique (26-28). Une intensité électrique maximale d'un courant électrique délivrable par ladite ou lesdites sources d'énergie électrique (26-28) est déterminée en fonction d'au moins une caractéristique de chaque source d'énergie électrique (26-28), un couple moteur maximal fourni par ladite machine électrique (21) alimentée électriquement par chaque source d'énergie électrique (26-28) avec ladite intensité électrique maximale est déterminé. Ledit couple moteur maximal est comparé avec une enveloppe requise (70) de couple moteur admissible par ledit générateur de gaz (11). Ladite intensité électrique maximale dudit courant électrique fourni par ladite ou lesdites sources d'énergie électrique (26-28) est adaptée afin de respecter ladite enveloppe requise (70) pour un démarrage dudit générateur de gaz (11).

## Description

L'invention se situe dans le domaine technique des moteurs thermiques, en particulier des turbomoteurs.

La présente invention concerne une installation motrice munie d'un turbomoteur et d'un circuit de démarrage adaptatif, ainsi qu'un procédé de démarrage adaptatif d'un turbomoteur.

Un turbomoteur comporte usuellement un générateur de gaz et au moins une turbine de travail. Le générateur de gaz est muni successivement d'un compresseur, d'une chambre de combustion d'un carburant et d'au moins une turbine de détente solidarisée en rotation au compresseur par un arbre de liaison. La turbine de travail peut être libre, à savoir désolidarisée mécaniquement en rotation de la turbine de détente et du compresseur, et donc du générateur de gaz. La turbine de travail est alors entraînée en rotation par les gaz sortants de la turbine de détente du générateur de gaz. Alternativement, la turbine de travail peut être solidarisée mécaniquement en rotation avec la turbine de détente, et donc avec le générateur de gaz.

Dans tous les cas, la turbine de travail entraîne mécaniquement en rotation un arbre de sortie du turbomoteur. Un turbomoteur peut équiper un aéronef, son arbre de sortie pouvant être relié, via une boîte de transmission de puissance, à une hélice ou à un rotor par exemple.

Pour démarrer le turbomoteur, le compresseur doit être entraîné en rotation afin de générer de l'air sous pression qui est injecté dans la chambre de combustion, puis les gaz générés par la combustion d'un carburant dans la chambre de combustion entraînent ensuite la turbine de détente en rotation. Cette mise en rotation du compresseur est effectuée par un démarreur relié mécaniquement en rotation à un arbre d'entraînement du compresseur. Ce démarreur peut être un simple moteur électrique ou une machine électrique réversible désignée alors « démarreur/générateur ». En outre, lors de la mise en rotation du compresseur, sa vitesse de rotation ne doit pas augmenter trop rapidement pour ne pas souffler, à savoir éteindre, la flamme générée lors de la première combustion du carburant dans la chambre de combustion.

Pour obtenir un fonctionnement autonome du turbomoteur, la vitesse de rotation de la turbine de détente doit dépasser un seuil afin que la compression de l'air injecté dans la chambre de combustion soit suffisante.

En outre, lors du démarrage, la vitesse de rotation d'un démarreur constitué par une machine à courant continue de type collecteur/balai augmente progressivement, ce qui provoque une augmentation de sa force contre électromotrice. L'intensité électrique du courant électrique alimentant ce type de démarreur, sur lequel il n'est pas possible d'agir pour faire varier le couple, diminue alors avec l'augmentation de sa vitesse de rotation.

Le couple moteur fourni par un tel démarreur et mettant en rotation l'arbre d'entraînement du compresseur ne peut être contrôlé et est proportionnel au courant électrique alimentant ce démarreur. Dès lors, au cours du démarrage d'un turbomoteur, ce couple moteur peut présenter un pic élevé au début de la phase de démarrage, puis diminue avec l'augmentation de la vitesse de rotation du démarreur et de sa force contre électromotrice.

La tension électrique de ce courant électrique est quant à elle liée à la source d'alimentation. Lorsque cette source est une batterie électrique, cette tension électrique chute à la mise en route du démarreur, puis augmente proportionnellement à la décroissante de l'intensité électrique de ce courant électrique alimentant le démarreur.

De plus, un couple résistant du générateur de gaz, généré par le compresseur et la turbine de détente, tend à s'opposer à cette mise en rotation de l'arbre d'entraînement du compresseur par le démarreur. Il est donc nécessaire de fournir une énergie électrique suffisante au démarreur pour entraîner le compresseur, avec un couple moteur supérieur au couple résistant.

A contrario, ce couple moteur ne doit pas être trop important pour ne pas provoquer une accélération trop rapide du générateur de gaz, notamment pour ne pas éteindre la chambre de combustion. De plus, un couple moteur trop important peut provoquer des dégradations dans la liaison mécanique liant le démarreur et l'arbre d'entraînement du compresseur.

Dans ce contexte, le couple moteur du démarreur pour démarrer un turbomoteur doit être compris entre un couple minimum et un couple maximum.

Le démarreur est par ailleurs alimenté en énergie électrique par une ou plusieurs sources d'énergie électrique, telle que par exemple une batterie électrique ou un réseau électrique. Dans le cas d'un turbomoteur d'un véhicule, et d'un aéronef en particulier, une ou plusieurs batteries électriques embarquées peuvent alimenter électriquement le démarreur.

L'énergie électrique que peuvent fournir des batteries électriques utilisées comme sources d'énergie électrique peut varier en fonction de leurs températures, cette énergie électrique diminuant avec la température, leurs états de charge ou encore leurs vieillissements. A basses températures, une batterie électrique peut ainsi s'avérer incapable de permettre le démarrage d'un turbomoteur.

De plus, lors du démarrage, l'appel d'une énergie électrique importante par le démarreur peut aussi se traduire par une chute importante de la tension électrique aux bornes d'une batterie électrique, en raison de la résistance électrique interne de la batterie électrique. Plus le courant électrique consommé par le démarreur est important, plus la tension électrique chute. Cette chute de la tension électrique peut varier en fonction, par exemple, de la température et de l'état de charge de la batterie électrique.

L'utilisation de plusieurs batteries électriques en parallèle peut permettre de pallier ces conséquences. Cependant, en présence de hautes températures et/ou avec des niveaux de charge élevés, l'énergie électrique alimentant le démarreur peut alors être trop importante, le démarreur étant alors susceptible d'induire un couple moteur supérieur au seuil haut précédemment évoqué.

Il s'avère donc complexe d'utiliser un ensemble de sources d'énergie électrique capable d'assurer un démarrage efficace d'un turbomoteur aussi bien à basses qu'à hautes températures, et avec divers niveaux de charge.

Le document EP 2390485 décrit un procédé de contrôle de démarrage d'un turbomoteur consistant à définir des points de consigne de courant électrique pour un démarreur en fonction d'un couple de démarrage préalablement déterminé pour la turbine à gaz, et à moduler une intensité électrique du courant électrique alimentant le démarreur pour obtenir le couple de démarrage recherché.

Le document EP 3043445 décrit un circuit électrique pour giravion régulant l'alimentation en énergie électrique pour le démarrage d'un turbomoteur par l'exploitation de plusieurs sources d'énergie électrique. Les sources d'énergie électrique comprennent une source principale munie de batteries électriques et une source secondaire comportant un module à décharge. Un convertisseur DC-DC bidirectionnel de type statique, monté en série avec le module à décharge, permet de réguler le fonctionnement de ce module à décharge en fonction de la valeur d'au moins un paramètre identifiant l'évolution de la phase de démarrage du turbomoteur.

Le document EP 1556597 concerne une machine électrique utilisée comme démarreur-générateur dans un avion. Cette machine électrique comporte un stator muni de plusieurs bobinages alimentés en courant électrique par une source d'énergie électrique. Un ou plusieurs commutateurs et une source d'énergie électrique sont commandés de manière sélective afin de relier électriquement un condensateur, en série, avec un ou plusieurs de ces bobinages pour fournir une énergie électrique supplémentaire aux bobinages du stator de sorte que la machine électrique génère un couple moteur suffisamment élevé afin de démarrer un moteur de l'avion.

Le document WO 2022/208021 concerne un procédé et un système de démarrage d'un turbomoteur comprenant une machine électrique et un système de commande convertissant une tension électrique continue en une tension électrique triphasée pour entraîner la rotation de la machine électrique à une vitesse déterminée.

Le document FR 3015571 décrit un système de démarrage d'une turbomachine comprenant une batterie d'accumulateurs, un démarreur à courant continu, un calculateur électronique de régulation, et un relais de transmission. Des premier et deuxième circuits sont montés en parallèle et interposés entre la batterie d'accumulateurs et le démarreur. Le premier circuit comporte un convertisseur continu-continu monté en série avec un premier interrupteur et le deuxième circuit comporte un deuxième interrupteur. De plus, le système comporte un capteur de la vitesse de rotation du compresseur de la turbomachine et un capteur de la température à l'entrée de la turbine libre de la turbomachine ainsi qu'un circuit de commande pour commander les premier et deuxième interrupteurs en fonction des informations fournies par ces deux capteurs.

Les documents EP 1865172, EP 2554799, EP 3186489, FR 3101918, EP 2295726, EP 0911515, FR 3076322 et US 2011/0042969 sont éloignés de l'invention.

La présente invention a alors pour objet de permettre le démarrage d'un générateur de gaz d'un turbomoteur sans risque de dégrader des pièces mécaniques, aussi bien à basses températures qu'à hautes températures.

L'invention vise ainsi un procédé de démarrage innovant d'une installation motrice munie d'un turbomoteur et une installation motrice permettant la mise en oeuvre d'un tel procédé.

La présente invention a tout d'abord pour objet un procédé de démarrage adaptatif d'un turbomoteur comportant un générateur de gaz, une machine électrique connectée mécaniquement à un arbre d'entraînement du générateur de gaz et électriquement à un générateur électrique muni d'au moins une source d'énergie électrique.

La machine électrique fait ainsi fonction de démarreur ou de démarreur-générateur pour le générateur de gaz du turbomoteur. La machine électrique est reliée mécaniquement à l'arbre d'entraînement du générateur de gaz, via une chaîne de transmission mécanique susceptible de comporter une démultiplication, obtenue par exemple à l'aide d'engrenages, de pignons et/ou de roues dentées.

Le procédé est remarquable en ce qu'il comporte les étapes suivantes :
- détermination d'une intensité électrique maximale d'un courant électrique délivrable par le générateur électrique en fonction d'au moins une caractéristique de ladite au moins une source d'énergie électrique,
- calcul d'un couple moteur maximal fourni par la machine électrique à l'arbre d'entraînement lorsque que la machine électrique est alimentée électriquement par le générateur électrique avec l'intensité électrique maximale déterminée du courant électrique,
- comparaison de ce couple moteur maximal avec une enveloppe requise de couple moteur admissible par le générateur de gaz,
- adaptation de ladite intensité électrique maximale en fonction de cette comparaison afin de respecter l'enveloppe requise, et
- démarrage du générateur de gaz avec la machine électrique alimentée par ladite au moins une source d'énergie électrique suite à cette adaptation.

L'installation motrice comportant le turbomoteur, la machine électrique et le générateur électrique peut équiper un véhicule, par exemple un aéronef afin d'entraîner en rotation une hélice et/ou un rotor par exemple. L'installation motrice peut aussi être munie d'un calculateur comportant ou relié à une mémoire. La mémoire peut comporter des instructions ou un programme d'ordinateur permettant au calculateur de mettre en oeuvre ce procédé.

Le générateur électrique peut comporter une unique source d'énergie électrique ou plusieurs de sources d'énergie électrique agencées en parallèle entre elles. Chaque source d'énergie électrique fournit un courant électrique, par exemple un courant électrique continu, pour alimenter électriquement la machine électrique lors d'un démarrage du générateur de gaz du turbomoteur.

Chaque source d'énergie électrique peut comporter un ou plusieurs capteurs pour mesurer directement ou indirectement une ou plusieurs caractéristiques de cette source d'énergie électrique. Par exemple, une telle caractéristique d'une source d'énergie électrique peut être choisie parmi au moins son niveau de charge, sa température, son niveau de vieillissement.

En fonction d'une ou de plusieurs caractéristiques d'une telle source d'énergie électrique ainsi que de premiers abaques ou de premières lois préétablis stockés dans la mémoire, le calculateur détermine l'intensité électrique maximale du courant électrique que peut délivrer cette source d'énergie électrique.

Lorsque le générateur électrique comporte une unique source d'énergie électrique, l'intensité électrique maximale du courant électrique fourni par le générateur électrique est égale à l'intensité électrique individuelle maximale du courant électrique de cette unique source d'énergie électrique.

Lorsque le générateur électrique comporte plusieurs sources d'énergie électrique, l'intensité électrique maximale du courant électrique fourni par le générateur électrique est égale à la somme des intensités électriques individuelles maximales des courants électriques de ces sources d'énergie électrique.

Ensuite, le calculateur détermine, en fonction de cette intensité électrique maximale que peut délivrer le générateur électrique ainsi que de seconds abaques ou de secondes lois préétablis stockés dans la mémoire, le couple moteur maximal que fournit la machine électrique lorsque qu'elle est alimentée avec un courant électrique présentant l'intensité électrique maximale précitée.

Le calculateur compare ensuite ce couple moteur maximal avec une enveloppe requise de couple moteur admissible par le générateur de gaz stockée dans la mémoire. Cette enveloppe requise est délimitée par une courbe de couple maximal et une courbe de couple minimal à respecter lors de l'entraînement du générateur de gaz par la machine électrique. Chacune de ces courbes de couple peut par exemple décroître avec l'augmentation de la vitesse de rotation du générateur de gaz. Les courbes de couple peuvent être établies par essais, calculs et /ou simulations par exemple.

Ensuite, en fonction de cette comparaison, le calculateur peut piloter, directement ou via une unité de pilotage dédiée, le générateur électrique pour adapter, et donc modifier, l'intensité électrique maximale du courant électrique que le générateur électrique fournit. Cette intensité électrique maximale est modifiée afin de correspondre, selon les seconds abaques ou les secondes lois, à un couple moteur inférieur ou égal à aux valeurs de couple de la courbe de couple maximal et supérieur ou égal aux valeurs de couple de la courbe de couple minimal. De la sorte, le couple moteur fourni par la machine électrique respecte l'enveloppe requise en se situant entre les courbes de couple maximal et minimal.

Enfin, la machine électrique est alimentée par le générateur électrique et entraîne mécaniquement l'arbre d'entraînement du générateur de gaz afin de le démarrer en respectant l'enveloppe requise de couple moteur admissible. De la sorte, aucune dégradation de la chaîne de transmission mécanique entre la machine électrique et le générateur de gaz n'est à redouter. De même, le démarrage du générateur de gaz est efficace, le phénomène de soufflage de flamme pouvant être éviter.

Le procédé selon l'invention peut comprendre une ou plusieurs des caractéristiques suivantes, prises seules ou en combinaison.

Selon une possibilité, l'adaptation peut comporter une étape de définition d'une intensité électrique maximale cible du courant électrique que doit fournir le générateur électrique pour que la machine électrique transmette, lorsqu'elle est alimentée par un courant électrique avec cette intensité électrique maximale cible, un couple moteur maximal conforme avec l'enveloppe requise, et par exemple situé sur la courbe de couple maximal. Cette définition est effectuée par le calculateur, à l'aide des seconds abaques ou des secondes lois, et de la courbe de couple maximal.

Selon une possibilité compatible avec les précédentes, le générateur électrique peut comporter plusieurs sources d'énergie électrique, et l'adaptation comporte alors une étape d'alimentation électrique de la machine électrique par une ou plusieurs de ces sources d'énergie électrique, lorsque le couple moteur maximal est supérieur à la courbe de couple maximal de l'enveloppe requise. Cette étape d'alimentation électrique est réalisée en fonction de l'intensité électrique maximale du courant électrique fourni par le générateur électrique, afin que la machine électrique fournisse un couple moteur maximal au générateur de gaz compris dans l'enveloppe requise.

Les sources d'énergie électrique sont reliées électriquement en parallèle entre elles pour alimenter conjointement la machine électrique. Le générateur électrique comporte des commutateurs de source agencés respectivement entre les sources d'énergie électrique et la machine électrique. Chaque commutateur de source peut comporter un contacteur, un relais ou un interrupteur pilotable à distance, à l'aide du calculateur par exemple, afin d'ouvrir ou de fermer le contacteur, le relais ou l'interrupteur pour permettre ou interdire le passage d'un courant électrique entre les bornes de ce commutateur de source, et par suite l'alimentation électrique de la machine électrique par la source d'énergie électrique à laquelle est relié ce commutateur de source.

Ainsi, lorsque le couple moteur maximal déterminé est supérieur à la courbe de couple maximal de l'enveloppe requise, l'étape d'alimentation électrique peut comprendre des étapes pour connecter ou déconnecter électriquement le nombre nécessaire de sources d'énergie électrique à l'aide des commutateurs de source afin que la somme des intensités électriques individuelles maximales des courants électriques des sources d'énergie électrique connectées électriquement à la machine électrique, voire le cas échéant l'intensité électrique individuelle maximale du courant électrique d'une unique source d'énergie électrique connectée à la machine électrique, permette selon les seconds abaques ou les secondes lois, que le couple moteur maximal de la machine électrique soit compris dans l'enveloppe requise. L'alimentation électrique peut éventuellement comporter des calculs itératifs de cette somme en faisant varier les sources d'énergie électrique connectées jusqu'à l'obtention d'une somme adéquate. Lors de cette étape d'alimentation électrique, la somme des intensités électriques individuelles maximales des courants électriques des sources d'énergie électrique connectées électriquement à la machine électrique, voire le cas échéant l'intensité électrique individuelle maximale du courant électrique de l'unique source d'énergie électrique connectée à la machine électrique, est par exemple égale à l'intensité électrique maximale cible.

Dans ce but, l'alimentation électrique peut comporter une sous-étape de connexion/déconnexion pour connecter ou déconnecter électriquement les commutateurs de source en fonction de leurs états initiaux, à savoir si les commutateurs de source sont électriquement ouverts ou fermés. Le calculateur est relié par une liaison filaire ou non filaire avec chaque commutateur de source, pour d'une part, vérifier leur état, et d'autre part les piloter afin de les connecter ou les déconnecter électriquement à une source d'énergie électrique.

Selon une possibilité compatible avec les précédentes, le générateur électrique comporte une unique source d'énergie électrique, et l'adaptation comporte alors une étape de décharge pour décharger électriquement l'unique source d'énergie électrique, lorsque le couple moteur maximal est supérieur aux valeurs de couple de la courbe de couple maximal de l'enveloppe requise, jusqu'à atteindre un niveau de charge requis lui permettant de fournir un courant électrique avec une intensité électrique individuelle maximale correspondant à un couple moteur maximal inférieur ou égal aux valeurs de couple de la courbe de couple maximal de l'enveloppe requise afin que la machine électrique fournisse un couple moteur au générateur de gaz compris dans l'enveloppe requise. Le démarrage du générateur de gaz est réalisé une fois l'étape de décharge terminée.

L'étape de décharge peut décharger l'unique source d'énergie électrique dans un réseau de bord du véhicule équipé de l'installation motrice par exemple, ou dans un dispositif de décharge dédié, tels un ou des consommateurs électriques. Une fois que le niveau de charge requis est atteint, l'étape de décharge est terminée et le démarrage du générateur de gaz peut être réalisée sans risque de dégrader le générateur de gaz ou la chaîne de transmission mécanique.

Le niveau de charge requis de la source d'énergie électrique est défini pour que la source d'énergie électrique délivre un courant électrique avec une intensité électrique individuelle maximale correspondant à un couple moteur maximal compris dans l'enveloppe requise, par exemple situé sur la courbe de couple maximal. Le calculateur peut calculer le niveau de charge requis en fonction des premiers abaques ou des premières lois relatifs à cette unique source d'énergie électrique, de la ou des caractéristiques de cette unique source d'énergie électrique et soit des seconds abaques ou des secondes lois et de la courbe de couple maximal, soit de l'intensité électrique maximale cible.

De plus, le calculateur peut transmettre ce niveau de charge requis ainsi qu'un niveau de charge courant de l'unique source d'énergie électrique à un afficheur pour afficher ce niveau de charge requis en parallèle du niveau de charge courant afin de les indiquer à un opérateur ou à un pilote du véhicule.

Le calculateur peut également calculer une durée nécessaire pour atteindre ce niveau de charge requis à l'aide d'une mesure d'une intensité électrique d'un courant électrique de décharge fourni par l'unique source d'énergie électrique pendant l'étape de décharge et du niveau de charge courant, ainsi qu'éventuellement de la ou des caractéristiques de cette unique source d'énergie électrique. Le calculateur peut éventuellement transmettre cette durée nécessaire à l'afficheur pour l'afficher afin d'indiquer à un opérateur ou à un pilote du véhicule dans combien de temps le démarrage pourra être effectué.

Alternativement, cette étape de décharge peut également être réalisée dans le cadre d'un générateur électrique comportant plusieurs sources d'énergie électrique afin de réduire l'intensité électrique individuelle maximale d'un courant électrique fourni par une de ces sources d'énergie électrique.

Selon une possibilité compatible avec les précédentes, le générateur électrique comporte une unique source d'énergie électrique et au moins un élément dissipateur agencé électriquement en parallèle de la machine électrique, et l'adaptation comporte une étape de connexion pour connecter électriquement au générateur électrique au moins un élément dissipateur lorsque le couple moteur maximal est supérieur aux valeurs de couple de la courbe de couple maximal de l'enveloppe requise, le ou les éléments dissipateurs étant alimentés électriquement par le générateur électrique. Suite à cette étape de connexion, l'unique source d'énergie électrique délivre un courant électrique à des bornes du ou des éléments dissipateurs connectés et à la machine électrique. Une partie de ce courant électrique délivrée par l'unique source d'énergie électrique circule ainsi à travers le ou les éléments dissipateurs et permet de dissiper une partie de l'énergie électrique de cette unique source d'énergie électrique. Le démarrage du générateur de gaz est réalisé après l'étape de connexion.

Un commutateur de dissipation est agencé électriquement en série entre le générateur électrique et au moins un élément dissipateur.

Le calculateur détermine par exemple la valeur de l'intensité électrique du courant électrique délivré par l'unique source d'énergie électrique qui doit être détournée de la machine électrique et, par suite, le nombre d'éléments dissipateurs devant être connectés à l'unique source d'énergie électrique. Le calculateur peut calculer cette valeur de l'intensité électrique du courant électrique délivrée par l'unique source d'énergie électrique en fonction de caractéristiques des éléments dissipateurs du générateur électrique, et soit de l'intensité électrique maximale cible, soit des seconds abaques ou des secondes lois et de la courbe de couple maximal.

Le calculateur pilote alors le nombre nécessaire de commutateurs de dissipation lors de l'étape de connexion pour que le nombre nécessaire d'éléments dissipateurs soit connecté à l'unique source d'énergie électrique.

De la sorte, les éléments dissipateurs dissipent le surplus de l'intensité électrique du courant électrique fourni par l'unique source d'énergie électrique lors de l'étape de dissipation.

Les éléments dissipateurs comportent par exemple une ou plusieurs résistances électriques.

Alternativement, cette étape de dissipation peut également être réalisée dans le cadre d'un générateur électrique comportant plusieurs sources d'énergie électrique afin de dissiper une partie de l'énergie électrique fournie par une de ces sources d'énergie électrique.

Selon une possibilité compatible avec les précédentes, une source d'énergie électrique peut comporter au moins une source rechargeable, par exemple une batterie électrique ou une supercapacité. Une telle source rechargeable permet avantageusement d'optimiser la masse de la source d'énergie électrique en évitant notamment des masses mortes. Une source d'énergie électrique peut aussi comporter un dispositif de stockage d'énergie primaire, donc non rechargeable.

En outre, lorsque l'installation motrice équipe un véhicule, le générateur électrique peut alimenter électriquement, avant le démarrage du turbomoteur, un réseau de bord du véhicule et/ou un ou plusieurs équipements du véhicule. L'intensité électrique du courant électrique ainsi consommé est généralement faible, mais peut parfois avoir une intensité électrique de l'ordre de 10% de l'intensité électrique du courant de démarrage. Cette intensité électrique du courant électrique ainsi consommé par le réseau de bord du véhicule et/ou par un ou plusieurs équipements du véhicule, peut dans ce cas être pris en compte dans le cadre de l'invention, et déduite de l'intensité électrique maximale du courant électrique fourni par le générateur électrique pour calculer le couple moteur maximal fourni par la machine électrique alimenté.

La présente invention a également pour objet une installation motrice munie d'au moins un turbomoteur comportant un générateur de gaz et d'un circuit de démarrage adaptatif comportant un calculateur, une machine électrique connectée mécaniquement à un arbre d'entraînement du générateur de gaz et électriquement à un générateur électrique muni d'au moins une source d'énergie électrique, et configurée pour démarrer le générateur de gaz.

Cette installation motrice est configurée pour mettre en oeuvre le procédé de démarrage adaptatif d'un turbomoteur précédemment décrit par l'intermédiaire du circuit de démarrage adaptatif.

Selon une première variante, le générateur électrique peut comporter plusieurs sources d'énergie électrique agencées en parallèle entre elles ainsi que des commutateurs de source reliant électriquement chacune des sources d'énergie électrique à la machine électrique. Les commutateurs de source sont pilotés indépendamment les uns des autres par le calculateur pour être ouverts ou fermés électriquement.

Selon une seconde variante, le générateur électrique peut comporter une unique source d'énergie électrique.

Quelle que soit la variante, le générateur électrique et la machine électrique peuvent être reliés électriquement à un réseau électrique, par exemple un réseau de bord d'un véhicule ou à des consommateurs électriques.

Le générateur électrique peut aussi comporter un ou plusieurs éléments dissipateurs ainsi qu'un ou plusieurs commutateurs de dissipation. Le ou les éléments dissipateurs peuvent être agencés électriquement en parallèle de la machine électrique, un commutateur de dissipation reliant électriquement un ou plusieurs éléments dissipateurs au générateur électrique. Alternativement, le ou les éléments dissipateurs peuvent être agencés électriquement en série avec la machine électrique, un commutateur de dissipation reliant électriquement le générateur électrique à une ligne électrique court-circuitant un ou plusieurs éléments dissipateurs.

Le ou les commutateurs de dissipation sont pilotés indépendamment les uns des autres par le calculateur pour être ouverts ou fermés électriquement.

Un élément dissipateur peut comporter une ou plusieurs résistances électriques.

Quelle que soit la variante, une source d'énergie électrique peut comporter au moins une source rechargeable, par exemple une batterie électrique, et/ou un dispositif de stockage d'énergie primaire.

La présente invention a enfin pour objet un véhicule muni de l'installation motrice précédemment décrite.

L'invention et ses avantages apparaîtront avec plus de détails dans le cadre de la description qui suit avec des exemples donnés à titre illustratif en référence aux figures annexées qui représentent :
- la figure 1, un schéma illustrant une installation motrice selon l'invention,
- la figure 2, un schéma illustrant une installation motrice selon l'invention,
- la figure 3, un schéma illustrant une installation motrice selon l'invention,
- la figure 4, un schéma illustrant une installation motrice selon l'invention,
- la figure 5, un schéma synoptique d'un procédé de démarrage adaptatif de l'installation motrice des figures 1 à 4, et
- la figure 6, un graphique représentant l'enveloppe requise de couple moteur admissible pour le démarrage d'un turbomoteur.

Les éléments présents dans plusieurs figures distinctes sont affectés d'une seule et même référence.

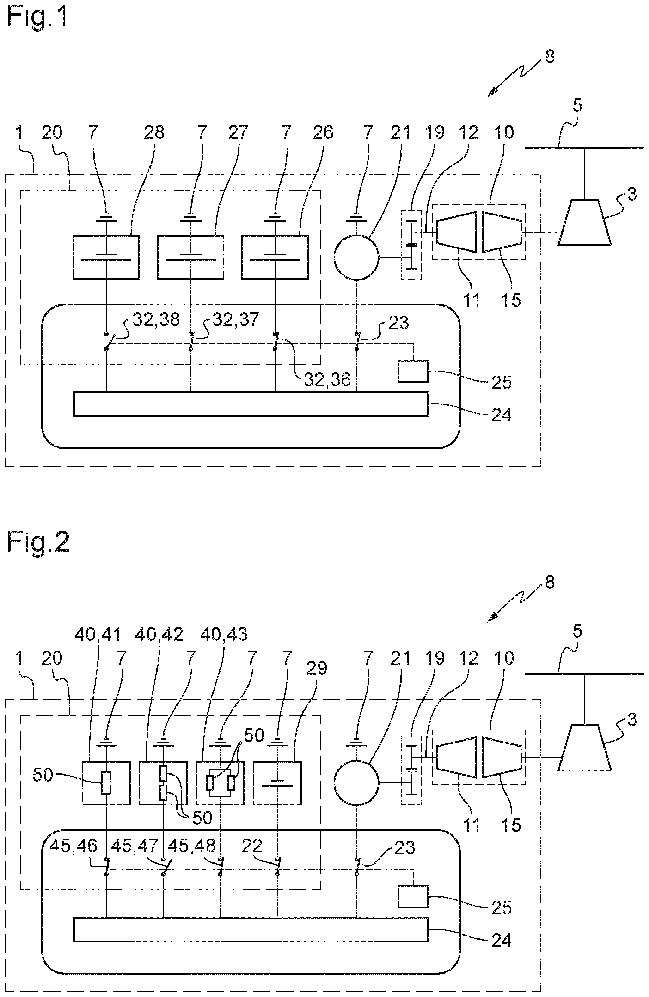

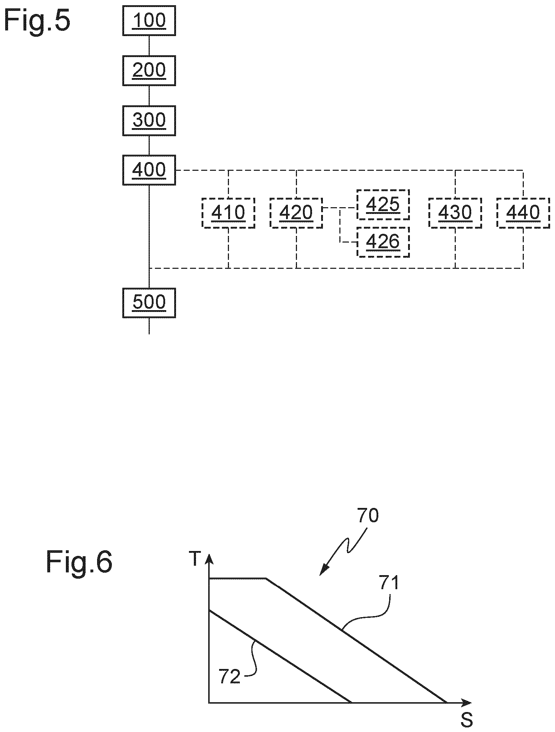

Les figures 1 à 4 présentent diverses réalisations d'une installation motrice 1 de l'invention. La figure 5 représente un schéma synoptique d'un procédé de démarrage adaptatif d'une telle installation motrice 1.

Quelle que soit la réalisation, l'installation motrice 1 comporte au moins un turbomoteur 10. L'installation motrice 1 peut être agencée au sein de tout système motorisé par un turbomoteur, et notamment au sein d'un véhicule 8. Par exemple, un tel véhicule 8 peut être un véhicule terrestre, maritime ou aérien. Par exemple, le véhicule 8 peut être un aéronef muni d'une voilure tournante 5 entraînée en rotation par le turbomoteur 10, via éventuellement une chaîne de transmission de puissance 3.

Les exemples de réalisation de l'installation motrice 1 représentés sur les figures comportent un seul turbomoteur 10, bien qu'une installation motrice 1 conforme à l'invention puisse comporter deux turbomoteurs 10 ou plus.

Un turbomoteur 10 comporte un générateur de gaz 11 et une turbine de travail 15 reliée mécaniquement à la chaîne de transmission de puissance 3, pour entraîner en rotation la voilure tournante 5 selon l'exemple donné. La turbine de travail 15 peut être dite « libre », à savoir non reliée mécaniquement au générateur de gaz 11. Alternativement, la turbine de travail 15 peut être reliée mécaniquement au générateur de gaz 11.

Le générateur de gaz 11 peut comporter successivement un compresseur, une chambre de combustion d'un carburant et une turbine de détente qui ne sont pas représentés sur les figures. La turbine de détente est solidarisée en rotation au compresseur par un arbre de liaison.

Indépendamment de son agencement, l'installation motrice 1 selon l'invention comporte également une machine électrique 21 faisant fonction au moins de démarreur électrique du turbomoteur 10. La machine électrique 21 peut comprendre un moteur électrique fonctionnant uniquement en mode moteur pour démarrer le turbomoteur 10. Alternativement, la machine électrique 21 peut fonctionner en fonction du besoin d'une part en mode moteur pour démarrer le turbomoteur 10, et d'autre part en mode générateur électrique pour transformer une énergie mécanique transmise par le turbomoteur 10 en énergie électrique.

Une chaîne de transmission mécanique 19 est agencée entre la machine électrique 21 et un arbre d'entraînement 12 du générateur de gaz 11. Une telle chaîne de transmission mécanique 19 peut comporter des engrenages, des pignons et/ou des roues dentées pour démultiplier la vitesse de rotation de la machine électrique 21 transmise à l'arbre d'entraînement 12.

L'installation motrice 1 comporte aussi un calculateur 25. Le calculateur 25 peut comprendre par exemple au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur, etc.

Alternativement à la mémoire que peut comporter le calculateur 25, l'installation motrice 1 peut comporter une mémoire (non représentée) reliée au calculateur 25.

L'installation motrice 1 selon l'invention comporte encore un générateur électrique 20 relié électriquement à la machine électrique 21 pour l'alimenter en énergie électrique. Le générateur électrique 20 peut comporter une ou plusieurs sources d'énergie électrique 26-29, chaque source d'énergie électrique 26-29 comportant par exemple une ou plusieurs batteries électriques.

Une telle source d'énergie électrique 26-29 peut aussi comporter un ou plusieurs capteurs usuels (non représentés) pour mesurer une ou plusieurs caractéristiques de cette source d'énergie électrique 26-29. Un tel capteur peut fournir un signal brut porteur de mesures brutes réalisées par ce capteur. Un capteur peut aussi comporter un calculateur intégré afin de traiter ces mesures brutes, par exemple via un filtrage ou un échantillonnage usuel, voire l'application de transformations, et fournir un signal traité porteur de ces mesures brutes ainsi traitées.

Par exemple, une source d'énergie électrique 26-29 peut comporter un capteur de température, éventuellement muni d'un thermomètre, pour mesurer une température interne de la source d'énergie électrique 26-29.

Selon un autre exemple, une source d'énergie électrique 26-29 peut comporter un capteur de charge permettant de mesurer un niveau de charge électrique de la source d'énergie électrique 26-29, à savoir la quantité d'énergie électrique qu'elle comporte.

Selon un autre exemple, une source d'énergie électrique 26-29 peut comporter un capteur de vieillissement pour mesurer un état de vieillissement de la source d'énergie électrique 26-29. Un tel capteur de vieillissement peut par exemple effectuer un calcul du niveau de vieillissement de la source d'énergie électrique 26-29 en fonction de paramètres internes, tels que sa résistance interne et son état de charge par exemple. Le niveau de vieillissement peut être pris en compte pour déterminer la valeur de l'intensité électrique maximale du courant électrique que peut fournir cette source d'énergie électrique 26-29.

Le générateur électrique 20 peut comporter une unique source d'énergie électrique 29 comme représenté sur les figures 2 à 4. Alternativement, le générateur électrique 20 peut comporter au moins deux sources d'énergie électrique 26-28 agencées électriquement en parallèle entre elles. Le générateur électrique 20 peut comporter par exemple trois sources d'énergie électrique 26-28 comme représenté sur la figure 1.

Chaque source d'énergie électrique 26-29 et la machine électrique 21 peuvent être reliées électriquement d'une part à une masse électrique commune 7 et d'autre part à un réseau électrique 24 de l'installation motrice 1. Le réseau électrique 24 peut être un réseau électrique de bord du véhicule 8.

Une telle source d'énergie électrique 26-29 peut ainsi fournir un courant électrique, par exemple continu pour alimenter notamment la machine électrique 21.

Un commutateur de démarrage 23 est agencée électriquement en série entre la machine électrique 21 et le réseau électrique 24. Lorsque le commutateur de démarrage 23 est électriquement fermé, la machine électrique 21 peut être alimentée électriquement par le générateur électrique 20 de sorte à entraîner en rotation le générateur de gaz 11 lors d'une phase de démarrage. Le calculateur 25 peut contrôler le commutateur de démarrage 23 pour l'ouvrir et le fermer électriquement selon le déroulement de la phase de démarrage. Dans ce but, le calculateur 25 peut être en communication, filaire ou non filaire, avec le commutateur de démarrage 23.

Selon l'illustration de la figure 1, un premier exemple de réalisation de l'installation motrice 1 peut comporter un générateur électrique 20 muni de trois sources d'énergie électrique 26,27,28 et de trois commutateurs de source 32 agencés entre le réseau électrique 24 et respectivement les trois sources d'énergie électrique 26,27,28.

La référence « 32 » désigne de façon générale les commutateurs de source alors que les références « 36,37,38 » désignent spécifiquement un des trois commutateurs de source.

Chaque commutateur de source 32 permet ainsi de connecter ou de déconnecter électriquement une source d'énergie électrique 26,27,28 avec le réseau électrique 24, pour par exemple alimenter électriquement la machine électrique 21.

Le calculateur 25 peut contrôler les commutateurs de source 32 selon une logique mémorisée. Le calculateur 25 peut être en communication, filaire ou non filaire, avec les commutateurs de source 32.

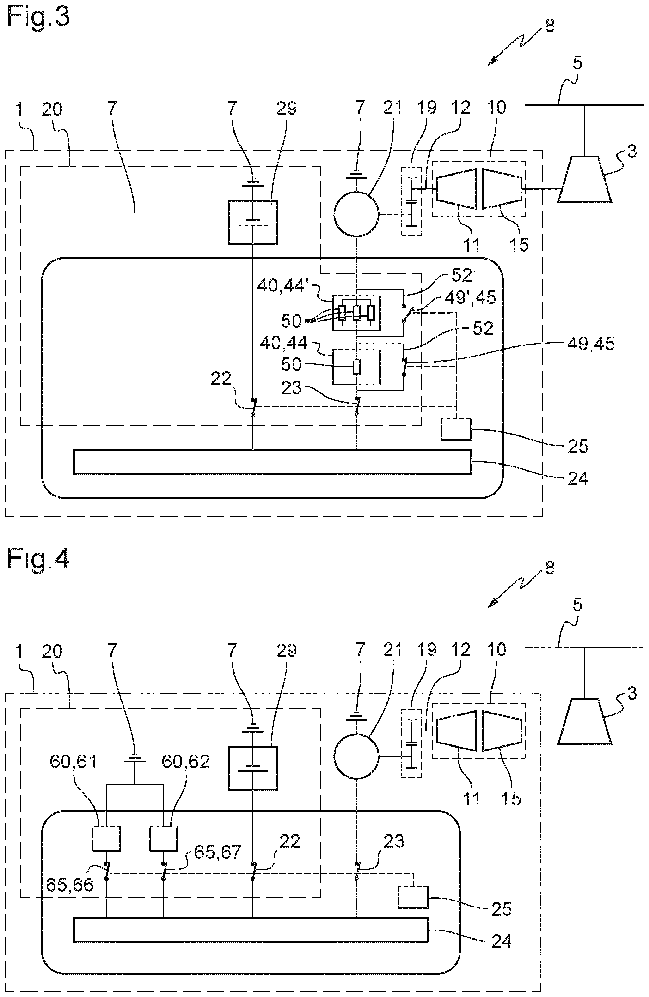

Selon les illustrations des figures 2 et 3, l'installation motrice 1 selon l'invention peut comporter un générateur électrique 20 muni d'éléments dissipateurs 40 et de commutateurs de dissipation 45.

La référence « 40 » désigne de façon générale les éléments dissipateurs alors que les références « 41,42,43,44,44' » désignent spécifiquement un des éléments dissipateurs. De même, la référence « 45 » désigne de façon générale les commutateurs de dissipation alors que les références « 46,47,48,49,49' » désignent spécifiquement un des commutateurs de dissipation.

Le générateur électrique 20 comporte aussi un commutateur d'alimentation 22 agencé électriquement en série électriquement entre la source d'énergie électrique 29 et le réseau électrique 24. Ce commutateur d'alimentation 22 est normalement fermé électriquement de sorte que la source d'énergie électrique 29 soit reliée électriquement avec le réseau électrique 24 afin de l'alimenter en courant électrique. Le calculateur 25 peut piloter le commutateur d'alimentation 22 pour l'ouvrir et déconnecter ainsi électriquement la source d'énergie électrique 29 du réseau électrique 24, en cas de besoin.

Chaque commutateur de dissipation 45 permet ainsi de connecter ou de déconnecter électriquement un élément dissipateur 40 avec le réseau électrique 24. Le calculateur 25 peut contrôler les commutateurs de dissipation 45 selon une logique mémorisée. Le calculateur 25 peut être en communication, filaire ou non filaire, avec les commutateurs de dissipation 45. Chaque élément dissipateur 40 peut comporter une ou plusieurs résistances électriques 50, qui peuvent être agencées électriquement entre elles en série ou en parallèle, en fonction de la valeur de résistance électrique recherchée, correspondant à la capacité voulue de dissipation électrique.

Selon un deuxième exemple de réalisation de l'installation motrice 1 représentée sur la figure 2, le générateur électrique 20 peut comporter une unique source d'énergie électrique 29, trois éléments dissipateurs 41,42,43 et trois commutateurs de dissipation 46,47,48 agencés entre le réseau électrique 24 et respectivement les trois éléments dissipateurs 41,42,43. Les trois éléments dissipateurs 41,42,43 et les trois commutateurs de dissipation 46,47,48 sont ainsi agencés électriquement en parallèle de la machine électrique 21.

Lorsqu'un commutateur de dissipation 45 est piloté de sorte à être électriquement fermé, l'élément dissipateur 40, avec lequel ce commutateur de dissipation 45 est agencé électriquement en série, est relié électriquement au réseau électrique 24 et peut être alimenté par la source d'énergie électrique 29 de sorte qu'un courant électrique circule dans l'élément dissipateur 40. Cet élément dissipateur 40 consomme et dissipe alors ce courant électrique le traversant, et donc de l'énergie électrique, par exemple en chaleur.

Selon un troisième exemple de réalisation de l'installation motrice 1 représentée sur la figure 3, le générateur électrique 20 peut comporter une unique source d'énergie électrique 29, deux éléments dissipateurs 44,44' agencés électriquement en série avec la machine électrique 21 et deux commutateurs de dissipation 49,49' agencés électriquement en parallèle respectivement des deux éléments dissipateurs 44,44'. Les deux commutateurs de dissipation 49,49' sont positionnés chacun sur une ligne électrique 52,52' court-circuitant un des éléments dissipateurs 44,44'.

Lorsqu'un commutateur de dissipation 45 est piloté de sorte à être électriquement ouvert, l'élément dissipateur 40, avec lequel ce commutateur de dissipation 45 est agencé électriquement en parallèle, est relié électriquement au réseau électrique 24 et à la machine électrique 21 et peut être alimenté par la source d'énergie électrique 29, la ligne électrique 52,52' n'étant pas reliée électriquement au réseau électrique 24 et par suite à la source d'énergie électrique 29, de sorte qu'un courant électrique circule dans l'élément dissipateur 40. Cet élément dissipateur 40 consomme et dissipe alors ce courant électrique le traversant, et donc de l'énergie électrique, par exemple en chaleur. A contrario, lorsqu'un commutateur de dissipation 45 est piloté de sorte à être électriquement fermé, la ligne électrique 52, 52' court-circuitant l'élément dissipateur 40, avec lequel ce commutateur de dissipation 45 est agencé électriquement en parallèle, et cet élément dissipateur 40 sont reliés électriquement au réseau électrique 24 et à la machine électrique 21 et peuvent être alimentés par la source d'énergie électrique 29. Toutefois, le courant électrique circule alors dans la ligne électrique 52,52' sans traverser l'élément dissipateur 40. Cet élément dissipateur 40 ne consomme et ne dissipe alors pas de courant électrique, et donc pas d'énergie électrique.

De façon similaire, le générateur électrique 20 peut comporter des éléments dissipateurs 40 agencés électriquement en série avec une source d'énergie électrique 26-29 et des commutateurs de dissipation 45 respectivement positionnés sur une ligne électrique 52,52' agencés électriquement en parallèle de ces éléments dissipateurs 40.

Selon l'illustration de la figure 4, un quatrième exemple de réalisation de l'installation motrice 1 peut comporter un générateur électrique 20 muni d'une unique source d'énergie électrique 29, de deux consommateurs électriques 60 et de deux commutateurs de décharge 65 agencés entre le réseau électrique 24 et respectivement les deux consommateurs électriques 60.

La référence « 60 » désigne de façon générale les consommateurs électriques alors que les références « 61,62 » désignent spécifiquement un des deux consommateurs électriques. De même, la référence « 65 » désigne de façon générale les commutateurs de décharge alors que les références « 66,67 » désignent spécifiquement un des deux commutateurs de décharge.

Le générateur électrique 20 comporte aussi un commutateur d'alimentation 22 agencé électriquement en série électriquement entre la source d'énergie électrique 29 et le réseau électrique 24. Ce commutateur d'alimentation 22 est par exemple fermé par défaut, et peut être ouvert, en cas de besoin, pour déconnecter électriquement la source d'énergie électrique 29 du réseau électrique 24.

Chaque commutateur de décharge 65 permet ainsi de connecter ou de déconnecter électriquement un consommateur électrique 60 avec le réseau électrique 24. Le calculateur 25 peut contrôler les commutateurs de décharge 65 selon une logique mémorisée. Le calculateur 25 peut être en communication, filaire ou non filaire, avec les commutateurs de décharge 65.

Lorsqu'un commutateur de décharge 65 est piloté de sorte à être électriquement fermé, le consommateur électrique 60, avec lequel ce commutateur de décharge 65 est agencé électriquement en série, est relié électriquement au réseau électrique 24 et peut être alimenté par la source d'énergie électrique 29 de sorte qu'un courant électrique circule dans le consommateur électrique 60. Ce consommateur électrique 60 consomme une partie de l'énergie électrique fournie par la source d'énergie électrique 29. Chaque consommateur électrique 60 peut comporter un ou plusieurs équipements électriques, tel qu'un système de climatisation, des écrans, un système de radiocommunication, des phares, ventilateurs, pompes hydrauliques...

La figure 5 illustre un procédé de démarrage adaptatif de l'installation motrice 1. Des instructions ou un programme d'ordinateur relatifs à ce procédé peuvent être stockés dans une mémoire du calculateur 25 ou dans une mémoire reliée à ce calculateur 25. Le calculateur 25 peut alors exécuter ces instructions ou ce programme pour démarrer le générateur de gaz 11 de l'installation motrice 10.

Ce procédé comporte cinq étapes principales.

Tout d'abord, le procédé comporte une détermination 100 d'une intensité électrique maximale du courant électrique délivrable par le générateur électrique 20. Cette intensité électrique maximale est déterminée à l'aide du calculateur 25 en fonction d'au moins une caractéristique de ladite au moins une source d'énergie électrique 26-29. Par exemple, la ou les caractéristiques d'une source d'énergie électrique 26-29 peuvent être choisies dans une liste comportant au moins son niveau de charge, sa température, son vieillissement.

La ou les caractéristiques de la ou les sources d'énergie électrique 26-29 sont par exemple mesurées de façon continue ou régulière à l'aide du ou des capteurs de la ou les sources d'énergie électrique 26-29. Chaque capteur transmet alors un signal, électrique ou optique, numérique ou analogique, porteur d'une information relative à la caractéristique mesurée au calculateur 25, par voie filaire ou non filaire.

Le procédé peut également comporter une étape de mesure d'une ou de plusieurs caractéristiques de la ou des sources d'énergie électrique 26-29, réalisée préalablement à cette étape de détermination 100.

Lorsque le générateur électrique 20 comporte plusieurs sources d'énergie électrique 26-28, l'intensité électrique maximale d'un courant électrique délivrable par le générateur électrique 20 est égale à la somme des intensités électriques individuelles maximales des courants électriques fournis par ces sources d'énergie électrique 26-28. Dans ce cas, l'étape de mesure peut également être réalisée pour chacune de ces sources d'énergie électrique 26-28.

Lorsque le générateur électrique 20 comporte une unique source d'énergie électrique 29, l'intensité électrique maximale du courant électrique fourni par le générateur électrique 20 est égale à l'intensité électrique individuelle maximale du courant électrique de cette unique source d'énergie électrique 29.

Au cours de cette étape de détermination 100, le calculateur 25 utilise des premiers abaques ou des premières lois préétablis stockés dans la mémoire. Ces premiers abaques ou premières lois préétablis sont spécifiques à chaque source d'énergie électrique 26-29. Ces premiers abaques ou premières lois définissent l'intensité électrique individuelle maximale du courant électrique que peut fournir chaque source d'énergie électrique 26-29 en fonction de sa ou de ses caractéristiques mesurées.

Ensuite, le procédé comporte un étape de calcul 200 d'un couple moteur maximal fourni par la machine électrique 21 à l'arbre d'entraînement 12 lorsque que la machine électrique 21 reçoit un courant électrique présentant l'intensité électrique maximale déterminée.

Au cours de cette étape de calcul 200, le calculateur 25 utilise des seconds abaques ou des secondes lois préétablis stockés dans la mémoire. Ces seconds abaques ou secondes lois préétablis sont spécifiques à la machine électrique 21 de l'installation motrice 1. Ces seconds abaques ou secondes lois définissent le couple moteur maximal que peut transmettre la machine électrique 21 en fonction de l'intensité électrique maximale du courant électrique alimentant la machine électrique 21.

Puis, au cours d'une étape de comparaison 300, le couple moteur maximal précédemment calculé est comparé par le calculateur 25 à une enveloppe requise 70 de couple moteur admissible par le générateur de gaz 11.

Un exemple d'une telle enveloppe requise 70 est représenté sur la figure 6. Le couple moteur admissible par le générateur de gaz 11 est représenté en ordonnée alors que sa vitesse de rotation est représentée en abscisse. Cette enveloppe requise 70 est délimitée par une courbe de couple maximal 71 et une courbe de couple minimal 72 à respecter lors de l'entraînement du générateur de gaz 11 par la machine électrique 21. Ces courbes de couple 71,72 sont décroissantes avec l'augmentation de la vitesse de rotation du générateur de gaz 11.

Ainsi, cette étape de comparaison 300 permet de déterminer si le couple moteur maximal est compris dans l'enveloppe requise 70, à savoir inférieur ou égal aux valeurs de couple de la courbe de couple maximal 71 et supérieur ou égal aux valeurs de couple de la courbe de couple minimal 72, ou bien s'il est en dehors de cette enveloppe requise 70. Dans ce dernier cas, le couple moteur maximal peut être inférieur aux valeurs de couple de la courbe de couple minimal 72 et supérieur aux valeurs de couple de la courbe de couple maximal 71.

Au cours d'une étape d'adaptation 400, l'intensité électrique du courant électrique fourni par le générateur électrique 20 est adaptée afin de respecter l'enveloppe requise en fonction de la comparaison 300. Cette étape d'adaptation 400 est réalisée lorsque le couple moteur maximal est supérieur aux valeurs de couple de la courbe de couple maximal 71 de l'enveloppe requise 70.

Lorsque le couple moteur maximal est compris dans l'enveloppe requise 70, aucune adaptation du courant électrique n'est nécessaire. Le démarrage du générateur de gaz 11 peut se faire sans risque de dégradation de l'installation motrice 1 ou de difficulté de démarrage.

Lorsque le couple moteur maximal est inférieur aux valeurs de couple de la courbe de couple minimal 72, le générateur électrique 20 de l'installation motrice 1 ne peut pas fournir un courant électrique avec une intensité électrique suffisante permettant le démarrage du générateur de gaz 11. Le calculateur 25 transmet alors un signal à un alerteur pour en informer un opérateur ou un pilote du véhicule 8 le cas échéant.

Lorsque le couple moteur maximal est supérieur aux valeurs de couple de la courbe de couple maximal 71, un risque d'endommagement de la chaîne de transmission mécanique 19 entre la machine électrique 21 et le générateur de gaz 11, voire du générateur de gaz 11, existe. Le calculateur 25 peut alors transmettre un signal à un alerteur pour le signaler à un opérateur ou un pilote du véhicule 8 le cas échéant. Celui-ci peut éventuellement décider d'agir manuellement sur une des sources d'énergie électrique 26-29 pour couper son alimentation électrique par exemple ou de la décharger partiellement en fonction des infos fournies par le calculateur 25.

Cette étape d'adaptation 400 permet avantageusement de réduire l'intensité électrique maximale du courant électrique fourni par le générateur électrique 20 à la machine électrique 21, quand cela est nécessaire, et en conséquence de réduire le couple moteur maximal que peut transmettre la machine électrique 21 afin qu'il soit compris dans l'enveloppe requise 70. Le générateur de gaz 11 peut ainsi être démarré sans risque de dégradation de la chaîne de transmission mécanique 19 notamment. Le calculateur 25 pilote le générateur électrique 20 pour adapter l'intensité électrique maximale du courant électrique fourni par au moins une source d'énergie 26-29.

Cette étape d'adaptation 400 peut comporter une étape de définition 410 d'une intensité électrique maximale cible du courant électrique que doit fournir le générateur électrique 20. Le calculateur 25 transforme la valeur du couple moteur maximal conforme avec l'enveloppe requise 70, et par exemple situé sur la courbe de couple maximal 71 en cette intensité électrique maximale cible, à l'aide des seconds abaques ou des secondes lois.

En outre, avec une installation motrice 1 à plusieurs sources électrique 26,27,28 du type de la figure 1, l'étape d'adaptation 400 peut comporter une étape d'alimentation électrique 420 pour alimenter électriquement la machine électrique 21 avec une ou plusieurs des sources d'énergie électrique 26,27,28. Au cours de cette étape d'alimentation électrique 420, un ou plusieurs commutateurs de source 36,37,38 sont connectés ou déconnectés afin qu'un nombre suffisant des sources d'énergie électrique 26,27,28 alimentent électriquement la machine électrique 21, et obtenir ainsi une intensité électrique maximale correspondant à un couple moteur maximal conforme à l'enveloppe requise 70. Cette intensité électrique maximale est par exemple égale à l'intensité électrique maximale cible.

Dans ce but, l'étape d'alimentation électrique 420 peut comporter des sous-étapes de connexion 425 et déconnexion 426 pour connecter ou déconnecter électriquement les commutateurs de source 36,37,38 à l'aide du calculateur 25, en fonction de l'état initial de chacun de ces commutateurs de source 36,37,38, à savoir si les commutateurs de source 36,37,38 sont électriquement ouverts ou fermés. Le calculateur 25 est relié par une liaison filaire ou non filaire avec chacun de ces commutateurs de source 36,37,38, pour d'une part, vérifier leur état, et d'autre part les piloter afin de les connecter ou les déconnecter électriquement à une source d'énergie électrique 26,27,28.

Dans l'exemple spécifique représenté sur la figure 1, la somme des intensités électriques individuelles maximales des courants électriques fournis par la première source d'énergie électrique 26 et par la deuxième source d'énergie électrique 27 permet à la machine électrique 21 de fournir un couple moteur maximal compris dans l'enveloppe requise 70.

Dès lors, lors de l'étape d'alimentation 420, voire lors des sous-étapes de connexion 425 et de déconnexion 426, le calculateur 25 commande l'ouverture du troisième commutateur de source 38, les trois commutateurs de source 36,37,38 étant initialement fermés, de sorte que la troisième source d'énergie électrique 28 ne fournisse pas de courant électrique au réseau électrique 24, et, par suite, à la machine électrique 21. Les premier et deuxième commutateurs de source 36,37 restent fermés de sorte que les première et deuxième sources électrique 26,27 fournissent conjointement leurs courants électriques au réseau électrique 24, et par suite, à la machine électrique 21 afin de respecter l'enveloppe requise 70.

Selon un autre exemple correspondant à l'installation motrice 1 représenté sur la figure 4 et dont le générateur électrique 20 comporte une unique source d'énergie électrique 29, l'étape d'adaptation 400 comporte une étape de décharge 430 pour décharger l'unique source d'énergie électrique 29, jusqu'à ce qu'elle atteigne un niveau de charge requis lui permettant de fournir un courant électrique avec l'intensité électrique maximale correspondant à un couple moteur maximal compris dans l'enveloppe requise 70, et par exemple égale à l'intensité électrique maximale cible. Dans ce but, lors de l'étape de décharge 430, le calculateur 25 peut piloter les commutateurs de décharge 65 pour les fermer électriquement en fonction de la comparaison 300.

Dans l'exemple spécifique, représenté sur la figure 4, le calculateur 25 commande la fermeture du premier commutateur de décharge 66 et du second commutateur de décharge 67 afin que le premier consommateur électrique 61 et le second consommateur électrique 62 soient connectés électriquement au réseau électrique 24 et consomment ainsi de l'énergie électrique stockée dans l'unique source d'énergie électrique 29. En fonction des caractéristiques électriques de chacun des deux consommateurs électriques 61,62 et des intensités électriques des courants électriques qui les traversent, le calculateur 25 peut déterminer la durée nécessaire pour atteindre le niveau de charge requis. Le calculateur 25 peut transmettre cette durée nécessaire à un afficheur pour l'afficher à l'intention d'un opérateur ou d'un pilote du véhicule 8.

Une fois le niveau de charge requis atteint, l'étape de décharge 430 est arrêtée, le calculateur 25 commande l'ouverture du premier commutateur de décharge 66 et du second commutateur de décharge 67 afin que les premier et second consommateurs électriques 61,62 soient déconnectés électriquement du réseau électrique 24 et ne consomment ainsi plus d'énergie électrique.

Alternativement ou en complément aux consommateurs électriques 60, pendant l'étape de décharge 430, l'unique source d'énergie électrique 29 peut fournir un courant électrique à un réseau de bord ou à des équipements du véhicule 8 qui sont usuellement utilisés, tels qu'une climatisation, des écrans... Cette alternative évite l'utilisation de consommateurs électriques 60 n'ayant pas d'autres fonctions que de baisser le niveau de charge de la source d'énergie électrique 29.

Selon un autre exemple correspondant à l'installation motrice 1 représenté sur les figures 2 et 3, et dont le générateur électrique 20 comporte une unique source d'énergie électrique 29 et des éléments dissipateurs 40, l'étape d'adaptation 400 comporte une étape de connexion 440 pour connecter électriquement un ou plusieurs éléments dissipateurs 40 avec le générateur électrique 20.Une fois relié à l'unique source d'énergie électrique 29, un élément dissipateur 40 permet de dissiper une partie de l'énergie électrique fournie par l'unique source d'énergie électrique 29 par exemple par dégagement de chaleur. Le courant électrique fourni par l'unique source d'énergie électrique 29 peut ainsi être réparti et circuler d'une part dans un ou plusieurs éléments dissipateurs 40 et d'autre part dans la machine électrique 21.

Le calculateur 25 commande alors les commutateurs de dissipation 45 en fonction de la comparaison 300 afin que les courants électriques traversant un ou plusieurs éléments dissipateurs 40 aient conjointement une intensité électrique supérieure ou égale à la différence entre l'intensité électrique maximale déterminée lors de l'étape de détermination 100 et une intensité électrique correspondant à une valeur de couple moteur située sur la courbe de couple maximal 71, et par exemple égale à l'intensité électrique maximale cible, et inférieure à la différence entre l'intensité électrique maximale déterminée lors de l'étape de détermination 100 et une intensité électrique correspondant à une valeur de couple moteur située sur la courbe de couple minimal 72. En conséquence, le courant électrique alimentant la machine électrique 21 a par exemple une intensité électrique maximale égale à l'intensité électrique maximale cible permettant à la machine électrique 21 de fournir un couple moteur compris dans l'enveloppe requise 70 si les courants électriques traversant le ou les éléments dissipateurs 40 connectés à la source d'énergie électrique 22 ont conjointement une intensité électrique supérieure ou égale à la différence entre l'intensité électrique maximale déterminée et une intensité électrique correspondant à une valeur de couple moteur située sur la courbe de couple maximal 71.

Dans l'exemple spécifique représenté sur la figure 2, le calculateur 25 commande la fermeture du premier commutateur de dissipation 46 et du troisième commutateur de dissipation 48, le deuxième commutateur de dissipation 47 restant ouvert électriquement. De la sorte, un courant électrique traverse le premier et le troisième éléments dissipateurs 41,43. Aucun courant électrique ne circule dans le deuxième élément dissipateur 42.

Dans l'exemple spécifique représenté sur la figure 3, le calculateur 25 commande l'ouverture du cinquième commutateur de dissipation 49', le quatrième commutateur de dissipation 49 restant fermé. De la sorte, un courant électrique traverse le cinquième élément dissipateur 44' ainsi que la première ligne électrique 52. Le quatrième élément dissipateur 44 et la deuxième ligne électrique 52' ne sont alors traversés par aucun courant électrique.

Quelle que soit la manière d'adapter l'intensité électrique fournie par le générateur électrique 20 à la machine électrique 21, au cours d'une étape de démarrage 500, le générateur de gaz 11 est entraîné en rotation par la machine électrique 21. Dans ce but, le calculateur 25 peut piloter le commutateur de démarrage 23 pour relier électriquement la machine électrique 21 au générateur électrique 20, via le réseau électrique 24.

Lorsque l'étape d'adaptation 400 comporte l'étape d'alimentation 420, l'étape de démarrage 500 est réalisée une fois cette étape d'alimentation 420 effectuée, à savoir une fois que le ou les commutateurs de source 32 nécessaires sont fermés électriquement et que le ou les autres commutateurs de source 32 sont ouverts électriquement.

Lorsque l'étape d'adaptation 400 comporte l'étape de décharge 430, l'étape de démarrage 500 est réalisée une fois cette étape de décharge 430 effectuée et terminée, à savoir une fois les commutateurs de décharge 65 ouverts électriquement et le niveau de charge requis de la source d'énergie électrique atteint.

Enfin, lorsque l'étape d'adaptation 400 comporte l'étape de connexion 440, le démarrage 500 est réalisée une fois cette étape de connexion 440 effectuée, à savoir une fois que le ou les commutateurs de dissipation 45 nécessaires sont fermés électriquement et que le ou les autres commutateurs de dissipation 45 sont ouverts électriquement.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé de démarrage adaptatif d'un turbomoteur (10) comportant un générateur de gaz (11), une machine électrique (21) connectée mécaniquement à un arbre d'entraînement (12) dudit générateur de gaz (11) et électriquement à un générateur électrique (20) muni d'au moins une source d'énergie électrique (26-29),
ledit procédé comportant les étapes suivantes :
- détermination (100) d'une intensité électrique maximale d'un courant électrique délivrable par ledit générateur électrique (20) en fonction d'au moins une caractéristique de ladite au moins une source d'énergie électrique (26-29),
- calcul (200) d'un couple moteur maximal fourni par ladite machine électrique (21) audit arbre d'entraînement (12) lorsque que ladite machine électrique (21) est alimentée électriquement par ledit générateur électrique (20) avec ladite intensité électrique maximale,
- comparaison (300) dudit couple moteur maximal avec une enveloppe requise (70) de couple moteur admissible par ledit générateur de gaz (11),
- adaptation (400) de ladite intensité électrique maximale en fonction de ladite comparaison (300) afin de respecter ladite enveloppe requise (70), et
- démarrage (500) dudit générateur de gaz (11) avec ladite machine électrique (21) alimentée par ledit générateur électrique (20) suite à ladite adaptation (500).

2. Procédé selon la revendication 1,
dans lequel ladite adaptation (400) comporte une définition (410) d'une intensité électrique maximale cible dudit courant électrique que doit fournir ledit générateur électrique (20) pour que ladite machine électrique (21) transmette, lorsque ladite machine électrique (21) est alimentée avec ledit courant électrique avec ladite intensité électrique maximale cible, un couple moteur maximal conforme avec ladite enveloppe requise (70).

3. Procédé selon l'une quelconque des revendications 1 à 2,
dans lequel ledit générateur électrique (20) comporte plusieurs sources d'énergie électrique (26,27,28), et ladite adaptation (400) comporte une alimentation (420) électrique de ladite machine électrique (21) avec une ou plusieurs desdites sources d'énergie électrique (26,27,28), lorsque ledit couple moteur maximal est supérieur à une courbe de couple maximal (71) de ladite enveloppe requise (70), en fonction de ladite intensité électrique individuelle maximale dudit courant électrique fourni par chacune desdites sources d'énergie électrique (26-29), afin que ladite machine électrique (21) fournisse un couple moteur maximal audit générateur de gaz (11) compris dans ladite enveloppe requise (70).

4. Procédé selon l'une quelconque des revendications 1 à 2,
dans lequel ledit générateur électrique (20) comporte une unique source d'énergie électrique (29), et ladite adaptation (400) comporte une décharge (430) de ladite unique source d'énergie électrique (29) lorsque ledit couple moteur maximal est supérieur à une courbe de couple maximal (71) délimitant ladite enveloppe requise (70), jusqu'à atteindre un niveau de charge requis lui permettant de fournir un courant électrique permettant à ladite machine électrique (21) de générer un couple compris dans ladite enveloppe requise (70), ledit démarrage (500) dudit générateur de gaz (11) étant réalisé une fois ladite décharge (430) terminée.

5. Procédé selon l'une quelconque des revendications 1 à 2,
dans lequel ledit générateur électrique (20) comporte une unique source d'énergie électrique (29), et ladite adaptation (400) comporte une connexion (440) de ladite machine électrique (21) avec au moins un élément dissipateur (40) relié électriquement à ladite machine électrique (21) lorsque ledit couple moteur maximal est supérieur à une courbe de couple maximal (71) de ladite enveloppe requise (70), ledit au moins un élément dissipateur (40) étant alimenté électriquement par ledit générateur électrique (20).

6. Procédé selon la revendication 5,
dans lequel, lors de ladite connexion (430), un calculateur (25) d'une installation motrice (1) comportant ledit turbomoteur (10), ladite machine électrique (21) et ledit générateur électrique (20) pilote au moins un commutateur de dissipation (45) agencé électriquement en série entre ledit générateur électrique (20) et ledit au moins un élément dissipateur (40) agencé électriquement en parallèle de ladite machine électrique (21).

7. Procédé selon la revendication 5,
dans lequel, lors de ladite connexion (430), un calculateur (25) d'une installation motrice (1) comportant ledit turbomoteur (10), ladite machine électrique (21) et ledit générateur électrique (20) pilote au moins un commutateur de dissipation (45) agencé électriquement en parallèle dudit au moins un élément dissipateur (40), ledit au moins un élément dissipateur (40) étant agencé électriquement en série avec ladite machine électrique (21), ledit au moins un commutateur de dissipation (45) étant positionné sur une ligne électrique (52,52') court-circuitant ledit au moins un élément dissipateur (40).

8. Procédé selon l'une quelconque des revendications 5 à 7,
dans lequel ledit au moins un élément dissipateur (40) comporte une ou plusieurs résistances électriques (50).

9. Procédé selon l'une quelconque des revendications 1 à 8,
dans lequel ladite au moins une caractéristique de ladite au moins une source d'énergie électrique (26-29) est choisie parmi son état de charge, sa température, son vieillissement.

10. Procédé selon l'une quelconque des revendications 1 à 9,
dans lequel ladite au moins une source d'énergie électrique (26-29) comporte au moins une batterie électrique.

11. Installation motrice (1) munie d'au moins un turbomoteur (10) comportant un générateur de gaz (11) et d'un circuit de démarrage adaptatif (20) comportant un calculateur (25), l'installation motrice (1) comprenant une machine électrique (21) connectée mécaniquement à un arbre d'entraînement (12) dudit générateur de gaz (11) et électriquement à un générateur électrique (20) muni d'au moins une source d'énergie électrique (26-29),
**caractérisée en ce que** ladite installation motrice (1) est configurée pour mettre en oeuvre le procédé selon l'une quelconque des revendications 1 à 10.

12. Installation motrice (1) selon la revendication 11,
dans lequel ledit générateur électrique (20) comporte plusieurs sources d'énergie électrique (26,27,28) agencées en parallèle entre elles et ladite installation motrice (1) comporte des commutateurs de source (32) reliant électriquement respectivement chacune desdites sources d'énergie électrique (26,27,28) à ladite machine électrique (21), lesdits commutateurs de source (32) étant pilotés par ledit calculateur (25).

13. Installation motrice selon l'une quelconque des revendications 11 à 12,
dans lequel ledit générateur électrique (20) comporte au moins un élément dissipateur (40) agencé électriquement en parallèle de ladite machine électrique (21), et au moins un commutateur de dissipation (45) reliant électriquement ledit au moins un élément dissipateur (40) au générateur électrique (20), ledit au moins un commutateur de dissipation (45) étant piloté par ledit calculateur (25).

14. Installation motrice selon l'une quelconque des revendications 11 à 12,
dans lequel ledit générateur électrique (20) comporte au moins un élément dissipateur (40) agencé électriquement en série avec ladite machine électrique (21), et au moins un commutateur de dissipation (45) agencé électriquement en parallèle dudit au moins un élément dissipateur (40) et positionné sur une ligne électrique (52,52') court-circuitant ledit au moins un élément dissipateur (40), ledit au moins un commutateur de dissipation (45) étant piloté par ledit calculateur (25).

15. Installation motrice selon l'une quelconque des revendications 13 et 14,
dans lequel ledit au moins un élément dissipateur (40) comporte une ou plusieurs résistances électriques (50).

16. Installation motrice selon l'une quelconque des revendications 11 à 15,
dans lequel ladite au moins une source d'énergie électrique (26-29) comporte au moins une batterie électrique.

17. Véhicule (8) muni d'une installation motrice (1),
dans lequel ladite installation motrice (1) est selon l'une quelconque des revendications 11 à 15.
